(19) **Europäisches Patentamt**
**European Patent Office**
**Office européen des brevets**

(11) **EP 3 859 303 B1**

(12) **EUROPEAN PATENT SPECIFICATION**

(45) Date of publication and mention
of the grant of the patent:
**28.08.2024  Bulletin 2024/35**

(51) International Patent Classification (IPC):
**G01N 13/02** [(2006.01)]  **G01N 29/02** [(2006.01)]
**G01N 29/032** [(2006.01)]  **G01N 29/06** [(2006.01)]

(21) Application number: **19866067.2**

(22) Date of filing: **10.09.2019**

(52) Cooperative Patent Classification (CPC):
**G01N 29/032; G01N 13/02; G01N 29/0654;**
G01N 2013/0208; G01N 2013/0266;
G01N 2291/02433; G01N 2291/0258

(86) International application number:
**PCT/JP2019/035568**

(87) International publication number:
**WO 2020/066600 (02.04.2020 Gazette 2020/14)**

(54) **MEASUREMENT SYSTEM**

MESSSYSTEM

SYSTÈME DE MESURE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **27.09.2018  JP 2018182391**

(43) Date of publication of application:
**04.08.2021  Bulletin 2021/31**

(73) Proprietor: **YOKOGAWA ELECTRIC
CORPORATION
Musashino-shi
Tokyo 180-8750 (JP)**

(72) Inventors:
• **OKADA, Syuhei
Musashino-shi, Tokyo 180-8750 (JP)**
• **TANAKA, Hiroaki
Musashino-shi, Tokyo 180-8750 (JP)**

(74) Representative: **Hoffmann Eitle
Patent- und Rechtsanwälte PartmbB
Arabellastraße 30
81925 München (DE)**

(56) References cited:
**JP-A- 2002 062 242      JP-A- 2002 062 242
JP-A- 2011 059 104      JP-A- 2011 059 104**

JP-A- **2013 238 490**      JP-A- **2018 096 708**
US-A1- **2002 116 987**

• XU JIANJUN ET AL: "Experimental and
theoretical analysis of bubble departure behavior
in narrow rectangular channel", PROGRESS IN
NUCLEAR ENERGY, PERGAMON PRESS,
OXFORD, GB, vol. 77, 25 June 2014 (2014-06-25),
pages 1 - 10, XP029047564, ISSN: 0149-1970, DOI:
10.1016/J.PNUCENE.2014.06.002
• YIN LIAOFEI ET AL: "Confined characteristics of
bubble during boiling in microchannel",
EXPERIMENTAL THERMAL AND FLUID
SCIENCE, ELSEVIER, AMSTERDAM, NL, vol. 74,
2 January 2016 (2016-01-02), pages 247 - 256,
XP029440338, ISSN: 0894-1777, DOI:
10.1016/J.EXPTHERMFLUSCI.2015.12.016
• PHAN H T ET AL: "Surface wettability control by
nanocoating: The effects on pool boiling heat
transfer and nucleation mechanism",
INTERNATIONAL JOURNAL OF HEAT AND MASS
TRANSFER, ELSEVIER, AMSTERDAM, NL, vol.
52, no. 23-24, 1 November 2009 (2009-11-01),
pages 5459 - 5471, XP026587374, ISSN:
0017-9310, [retrieved on 20090805], DOI:
10.1016/J.IJHEATMASSTRANSFER.2009.06.032

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

CROSS-REFERENCE TO RELATED APPLICATION

The present application claims priority to Japanese Patent Application No. 2018-182391 filed September 27, 2018.

TECHNICAL FIELD

The present disclosure relates to a measurement system.

BACKGROUND

A measurement system for acquiring the surface state of a solid, including wettability with respect to a liquid, based on the contact angle of a droplet in contact with the solid surface is known. For example, see patent literature (PTL) 1.
PTL 2 relates to experimental as well as theoretical analysis of bubble departure behavior in narrow rectangular channel.
PTL 3 relates measuring surface tension by observing the interface shape of a small amount of liquid place on a solid sample vibrating vertically and comparing the observed surface tensions with a numerically calculated value.
PTL 4 relates to characteristics of bubble during boiling in microchannel.
PTL 5 relates to surface wettability control by nanocoating.
PTL 6 relates to methods for measuring a contact angle.

CITATION LIST

Patent Literature

PTL 1: JP 2017-133924 A
PTL 2: XU JIANJUN ET AL: "Experimental and theoretical analysis of bubble departure behavior in narrow rectangular channel", PROGRESS IN NUCLEAR ENERGY, PERGAMON PRESS, OXFORD, GB, vol. 77, 25 June 2014
PTL 3: JP 2011 059104 A
PTL 4: YIN LIAOFEI ET AL: "Confined characteristics of bubble during boiling in microchannel", EXPERIMENTAL THERMAL AND FLUID SCIENCE, ELSEVIER, AMSTERDAM, NL, vol. 74, 2 January 2016
PTL 5: PHAN H T ET AL: "Surface wettability control by nanocoating: The effects on pool boiling heat transfer and nucleation mechanism", INTERNATIONAL JOURNAL OF HEAT AND MASS TRANSFER, ELSEVIER, AMSTERDAM, NL, vol. 52, no. 23-24, 1 November 2009
PTL 6: JP 2002 062242 A

SUMMARY

(Technical Problem)

Demand exists for acquiring the surface state of a solid, including wettability with respect to a liquid, when the solid is submerged in liquid.
The present disclosure aims to provide a measurement system that can acquire the surface state of a solid, including wettability with respect to a liquid, when the solid is submerged in liquid.

(Solution to Problem)

A measurement system according to an embodiment includes a detector configured to detect a contact state of a bubble with respect to a wall, the bubble being included in a fluid that is in contact with the wall, and a controller configured to acquire a state of at least one of the wall, the fluid, and the bubble based on the contact state of the bubble with respect to the wall. This configuration enables acquisition of the state of at least one of a solid, liquid, and a gas even when the solid remains in contact with the liquid. Consequently, the surface state, including wettability with respect to a liquid, of a solid submerged in liquid can be acquired, wherein the fluid is positioned in an area surrounded by the wall, the detector is configured to detect the contact state of the bubble on an inside of the area surrounded by the wall, the wall is at least a portion of an inner wall of a tube through which the fluid flows, the detector is configured to detect the contact state of the bubble with respect to the inner wall while the fluid is flowing through the tube, the detector is configured to detect a number of bubbles in contact with the wall at a first time as a first number of bubbles and detect a number of bubbles in contact with the wall at a second time as a second number of bubbles, the second time being a predetermined time after the first time, and the controller is configured to acquire the state of at least one of the wall, the fluid, and the bubble based on a comparison between the first number of bubbles and the second number of bubbles.

In a measurement system according to an embodiment, the detector may be configured to output ultrasonic waves towards the bubble and detect the contact state of the bubble based on at least one of ultrasonic waves that pass through the bubble and ultrasonic waves reflected by the bubble. This configuration enables the detector to detect the contact state of the bubble while the detector is located on the outside of the wall, without coming into contact with the fluid. Consequently, the surface state of the solid can be acquired more easily.

In a measurement system according to an embodiment, the detector may be configured to generate an ultrasonic image of the bubble and detect the contact state of the bubble based on the ultrasonic image. This configuration enables the contact angle of the bubble to be detected easily based on the shape of the bubble included in the image. Consequently, the surface state of the solid can be acquired more easily.

In a measurement system according to an embodiment, the detector may be configured to generate a captured image by imaging a bubble in contact with the wall and detect the contact state of the bubble based on the captured image. This configuration enables the contact angle of the bubble to be detected easily based on the shape of the bubble included in the image. Consequently, the surface state of the solid can be acquired more easily.

According to the invention, the fluid is positioned in an area surrounded by the wall, and the detector may be configured to detect the contact state of the bubble on an inside of the area surrounded by the wall. In this way, the contact state of the bubble positioned on the inside of the area surrounded by the wall is detected, enabling easy acquisition of the surface state of the inner wall of a tank retaining the fluid or the inner wall of a tube through which the fluid flows, for example.

According to the invention, the wall is at least a portion of an inner wall of a tube through which the fluid flows, and the detector may be configured to detect the contact state of the bubble with respect to the inner wall while the fluid is flowing through the tube. This configuration enables acquisition of the surface state of the inner wall of the tube while the fluid is flowing through the tube.

According to the invention, the detector is configured to detect the number of bubbles in contact with the wall at a first time as a first number of bubbles and detect the number of bubbles in contact with the wall at a second time as a second number of bubbles, the second time being a predetermined time after the first time, and the controller may be configured to acquire the state of at least one of the wall, the fluid, and the bubble based on a comparison between the first number of bubbles and the second number of bubbles. This configuration enables the surface state of the wall to be acquired as the ease of adhesion of the bubble. Consequently, the surface state of the wall can be acquired easily even when the contact angle of the bubble is difficult to detect.

In a measurement system according to an embodiment, the controller may be configured to acquire the state of at least one of the wall, the fluid, and the bubble at least two times separated by a predetermined time period and monitor a change in the state. Even if an absolute index, such as the surface free energy, cannot be acquired as the surface state of the wall, this configuration enables the surface state of the wall to be acquired in a relative manner. Consequently, the state of at least one of the wall, the fluid, and the bubble can easily be monitored.

(Advantageous Effect)

According to the present disclosure, a measurement system that can acquire the surface state, including wettability with respect to a liquid, when a solid is submerged in liquid is provided.

BRIEF DESCRIPTION OF THE DRAWINGS

In the accompanying drawings:

FIG. 1 is a block diagram illustrating an example configuration of a measurement system according to an embodiment;
FIG. 2 is a cross-sectional diagram illustrating an example configuration of a measurement target;
FIG. 3 illustrates an example configuration such that a detector includes an imaging apparatus;
FIG. 4 illustrates an example configuration such that a detector includes an ultrasonic transmitter and an ultrasonic receiver;
FIG. 5 is a cross-sectional diagram illustrating an example of measuring the contact angle of a droplet in contact with a solid surface; and
FIG. 6 is a block diagram illustrating an example configuration of a measurement system that further includes a bubble generator.

DETAILED DESCRIPTION

A method for acquiring the surface state of a solid, including wettability with respect to a liquid, based on the contact angle of a droplet in contact with the solid surface is known.

When the solid is submerged in a liquid, the contact angle of a droplet in contact with the solid surface cannot be measured. In other words, the surface state of a solid submerged in liquid cannot be acquired based on the contact angle of a droplet. Demand exists for acquiring the surface state of a solid on the inner wall of a tank that retains a liquid, or the inner wall of a pipe through which liquid flows, without draining the liquid.

The wettability of a liquid with respect to a solid is determined not only by the surface free energy of the solid, but also based on various factors such as the surface roughness of the solid. It is therefore difficult to calculate the surface free energy of a liquid. When the state of the liquid is not calculated by an absolute standard, the change in state of the liquid needs to be observed based on a relative standard.

The contact angle of a droplet in contact with a solid surface sometimes cannot be measured accurately when the droplet is small. Demand exists for acquiring the state of a solid surface without the need to measure the contact angle.

A measurement system, according to the present disclosure, that can address these problems is described below.

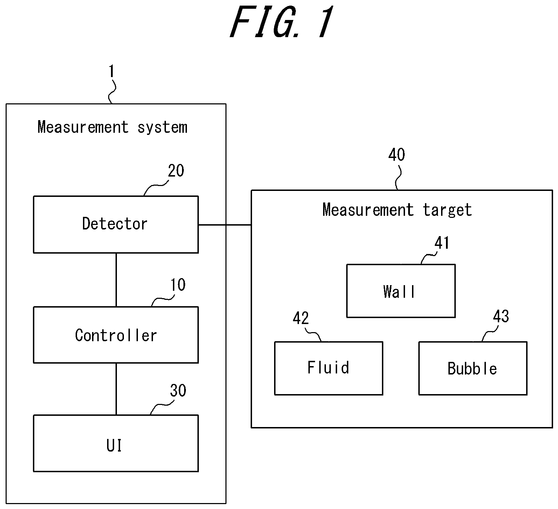

As illustrated in FIG. 1, a measurement system 1 according to an embodiment of the present disclosure includes a controller 10 and a detector 20. The detector 20 detects the state of a measurement target 40 that includes a wall 41, a fluid 42, and a bubble 43. The wall 41 is a solid. The fluid 42 is a liquid. The bubble 43 is a gas. The bubble 43 in contact with a surface 41a of the solid is defined by a balance in the surface tension acting between each of the solid, the liquid, and the gas. The detector 20 detects the contact state of the bubble 43 with respect to the wall 41. The contact state of the bubble 43 with respect to the wall 41 may, for example, be represented by the contact angle of the bubble 43 in contact with the wall 41 in the fluid 42, as described below. The contact state of the bubble 43 with respect to the wall 41 may be represented by the ease of adhesion of the bubble 43 to the wall 41 in the fluid 42, as described below.

The contact state of the bubble 43 with respect to the wall 41 is determined based on the state of the wall 41, the state of the fluid 42, and the state of the bubble 43. Accordingly, based on the contact state of the bubble 43 with respect to the wall 41, the controller 10 can acquire the state of at least one of the wall 41, the fluid 42, and the bubble 43. The controller 10 can also acquire a combination of two or more of these states. In other words, the measurement system 1 can acquire the state of at least one of a solid, liquid, and a gas even when the solid remains in contact with the liquid. The measurement system 1 can also acquire a combination of two or more of these states. Consequently, the state of a solid forming the inner wall of a tank that retains a liquid, or the inner wall of a pipe through which liquid flows, for example, can be acquired more easily.

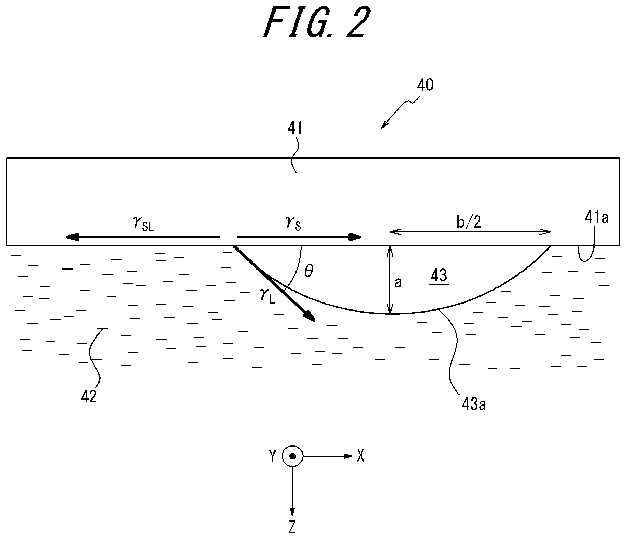

As illustrated in FIG. 2, the measurement target 40 includes the wall 41 that has the surface 41a, the fluid 42 in contact with the surface 41a, and the bubble 43 present in the fluid 42 and in contact with the surface 41a. When the surface 41a of the solid is flat, the interface between the solid and the liquid and the interface between the solid and the gas are both flat surfaces along the surface 41a. On the other hand, the interface between the liquid and the gas may include a portion of a spherical surface or a portion of a surface that can be approximated to a sphere.

The cross-section illustrated in FIG. 2 is assumed to be a surface that is orthogonal to the surface 41a of the solid and passes through the center of a spherical surface forming at least a portion of the interface between the liquid and the gas or the center of a surface approximated to at least a portion of the interface between the liquid and the gas. In the cross-section, the lines representing the surfaces where the solid, the liquid, and the gas are in contact with each other are referred to as triple lines. The angle between the line representing the interface between the liquid and the gas and the line representing the surface 41a of the solid in the cross-section is indicated by $\theta$. The angle $\theta$ is also called the contact angle.

At the triple lines, an interfacial tension acts between each of the solid, the liquid, and the gas. A liquid-solid interfacial tension indicated by $\gamma_{SL}$ acts between the wall 41 and the fluid 42. A solid-gas interfacial tension indicated by ys acts between the wall 41 and the bubble 43. A liquid-gas interfacial tension indicated by $\gamma_L$ acts between the fluid 42 and the bubble 43. The tensions are balanced with each other along the surface 41a at the intersection of the triple lines. Expression (1) below holds in FIG. 2.

$$\gamma_{SL} = \gamma_L \cos\theta + \gamma_S \qquad (1)$$

The solid-gas surface tension is also referred to as the surface free energy of the solid. The liquid-gas surface tension is also referred to as the surface free energy of the liquid. The magnitude of the contact angle can be determined based on the surface free energy of the solid and the surface free energy of the liquid. A qualitative expression of the tendency in the size of the contact angle is that as the surface free energy of the solid is larger, or as the surface free energy of the liquid is smaller, the contact angle grows larger. The state of the wall 41 may be represented by the surface free energy of the solid or by a parameter representing the hydrophilicity or hydrophobicity of the solid. The parameter representing the hydrophilicity or hydrophobicity of the solid may, for example, be the contact angle of water with respect to the solid. The state of the fluid 42 may be represented by the surface free energy of the liquid. When the state of only one of the bubble 43, the wall 41, and the fluid 42 changes and the state of the other two does not change, or changes only to a negligible degree, the contact angle itself corresponds to the target state, enabling management of state changes.

The magnitude of the contact angle is determined not only by the surface free energy of the solid, but also based on the surface roughness of the solid. In other words, the surface state of the solid acquired based on the contact angle includes not only the surface free energy of the solid but also the surface roughness of the solid.

The controller 10 acquires information from the components of the measurement system 1 and controls the components. The controller 10 may include a processor such as a central processing unit (CPU). The controller 10 may implement the various functions of the measurement system 1 by executing a predetermined program.

The controller 10 may include a memory. The memory may store various information used for operations of the measurement system 1, programs for implementing the functions of the measurement system 1, and the like. The memory may function as a working memory of the controller 10. The memory may, for example, be a semiconductor memory. The measurement system 1 may include the memory as a separate component from the controller 10.

The measurement system 1 may further include a user interface (UI) 30. The UI 30 may include an input device, such as physical keys or a touch panel, that accepts operation input from a user. The UI 30 may include a display device, such as a display or a light emitting element, that displays information reported to the user. The UI 30 may include a sound device, such as a speaker, that outputs audio for reporting information to the user. The UI 30 is not limited to the above examples and may include various other devices.

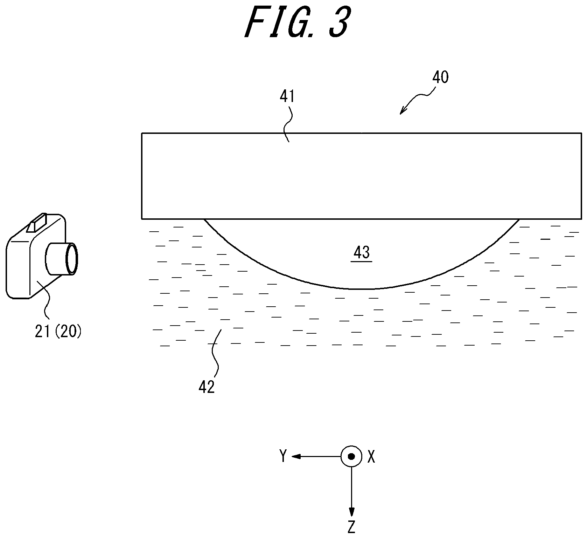

The detector 20 detects the state of the measurement target 40. The detector 20 may acquire the state of the measurement target 40 as a side view image from the surface where the wall 41 intersects with the interface between the fluid 42 and the bubble 43. The side that the detector 20 detects as a side view of the state of the measurement target 40 is also referred to as the detection side. The detection side is assumed to lie in the XZ plane. As illustrated in FIG. 3, the detector 20 may include an imaging apparatus 21, such as a camera. The imaging apparatus 21 may capture an image of the measurement target 40 viewed from the detection side. The imaging apparatus 21 may capture an image of the measurement target 40 by detecting various types of electromagnetic waves, such as visible light or infrared light, emitted from the measurement target 40. The image of the measurement target 40 captured by the imaging apparatus 21 is also referred to as a captured image.

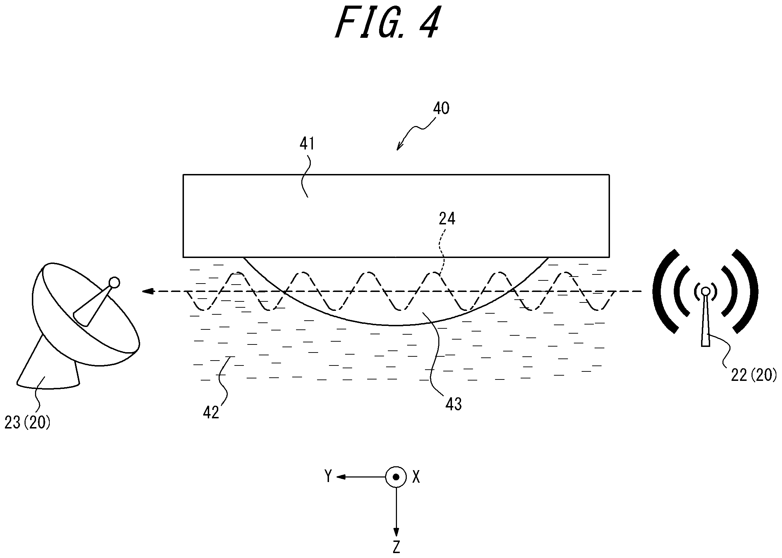

As illustrated in FIG. 4, the detector 20 may include an ultrasonic transmitter 22 and an ultrasonic receiver 23. The ultrasonic transmitter 22 and the ultrasonic receiver 23 are positioned on opposite sides of the measurement target 40. It is assumed that the ultrasonic transmitter 22 is positioned in the negative direction of the y-axis and the ultrasonic receiver 23 in the positive direction of the y-axis from the measurement target 40. The detector 20 may acquire the state of the measurement target 40 by transmitting ultrasonic waves 24 from the ultrasonic transmitter 22 to the measurement target 40 and receiving the ultrasonic waves 24 that pass through the measurement target 40 with the ultrasonic receiver 23.

The ultrasonic waves 24 are absorbed at a predetermined absorption in each of a solid, a liquid, and a gas. The absorption of the ultrasonic waves 24 is determined based on the type, state, and the like of the material through which the ultrasonic waves 24 pass. The detector 20 can acquire the state of the measurement target 40, which includes the bubble 43 and the fluid 42, based on the difference between the absorption of the ultrasonic waves 24 that pass through the bubble 43 and the absorption of the ultrasonic waves 24 that pass through the fluid 42.

The detector 20 may move the ultrasonic transmitter 22 and/or the ultrasonic receiver 23 along the detection side. In other words, the detector 20 may move the ultrasonic transmitter 22 and/or the ultrasonic receiver 23 along the x-axis or the z-axis. This enables acquisition of the state of the measurement target 40 as an ultrasonic transmission image of the measurement target 40 from the side. The ultrasonic transmission image can include an image representing the shape of the bubble 43 as viewed from the side.

The detector 20 may further include an ultrasonic transmitter 22 and an ultrasonic receiver 23 positioned on opposite sides of the measurement target 40 along the z-axis. The detector 20 may move the ultrasonic transmitter 22 and/or the ultrasonic receiver 23, positioned along the z-axis on opposite sides of the measurement target 40, along the surface 41a of the wall 41. This enables the detector 20 to acquire the distribution of bubbles 43 positioned on the surface 41a in the range of the measurement target 40. If the ultrasonic transmission image includes a plurality of bubbles 43, the image representing the shape of the bubble 43 from the side might depict a plurality of bubbles 43 in overlap. The detection accuracy of the shape of the bubble 43 would decrease in this case. Even when an image with a plurality of bubbles 43 in overlap is included in the ultrasonic transmission image, the detection accuracy of the shape of the bubble 43 can be increased by the detector 20 acquiring a distribution of the bubbles 43 positioned on the surface 41a.

The detector 20 may include an ultrasonic wave transceiver configured to transmit and receive ultrasonic waves.

The detector 20 may acquire the state of the measurement target 40 by transmitting ultrasonic waves towards the measurement target 40 from the ultrasonic wave transceiver and receiving ultrasonic waves reflected by the measurement target 40 with the ultrasonic wave transceiver. By moving the ultrasonic transceiver along the detection side, the detector 20 may acquire the state of the measurement target 40 as an ultrasonic reflection image of the measurement target 40 from the side. The ultrasonic transmitter 22 and ultrasonic receiver 23, along with the ultrasonic transceiver, are collectively referred to as an ultrasonic device. The ultrasonic transmission image and ultrasonic reflection image are collectively referred to as an ultrasonic image.

The shape of the portion where the bubble 43 is in contact with the fluid 42 is approximated by an arc 43a, as illustrated in FIG. 2, in the side view included in the image acquired by the detector 20. The shape of the portion where the bubble 43 is in contact with the surface 41a of the wall 41 is approximated by a circle in plan view of the surface 41a (as seen from the positive direction of the z-axis). The radius of the circle representing the portion where the bubble 43 is in contact with the surface 41a is defined as b/2. The height of the bubble 43 as viewed from the surface 41a is defined as a. In other words, the shape of the bubble 43 in a side view is represented by a and b.

The contact angle ($\theta$) of the bubble 43 with respect to the surface 41a is calculated by the $\theta/2$ method using a and b as parameters. The contact angle ($\theta$) is represented by Expression (2) below using the $\theta/2$ method.

$$\theta = 2 \times \tan^{-1} \frac{2a}{b} \qquad (2)$$

The contact angle ($\theta$) of the bubble 43 with respect to the surface 41a can be calculated by various methods other than the $\theta/2$ method, such as the tangent method or curve fitting.

The contact angle ($\theta$) of the bubble 43 with respect to the surface 41a is an element identifying the relationship between $\gamma_{SL}$, ys, and $\gamma_L$, as in Expression (1) above. The values of $\gamma_{SL}$, ys, and $\gamma_L$ are all unknowns. In other words, when the values of $\gamma_{SL}$, ys, and $\gamma_L$ are calculated, further parameters are necessary to calculate three unknowns. For example, by calculating the contact angle ($\theta$) for different types of fluids 42, the values of $\gamma_{SL}$, ys, and $\gamma_L$ can be calculated.

Here, the work of separating the adhesive bond between the liquid and the solid is represented by $\gamma_{SL}$, ys, and $\gamma_L$. The work of separating the adhesive bond between the liquid and the solid is referred to as adhesive work and is represented by $W_{SL}$. $W_{SL}$ is represented by Expression (3) below using the Dupre equation.

$$W_{SL} = \gamma_S + \gamma_L - \gamma_{SL} \qquad (3)$$

$W_{SL}$ is also represented by Expression (4) below based on Expressions (1) and (3).

$$W_{SL} = \gamma_L \left(1 - \cos\theta\right) \qquad (4)$$

Here, ys is represented as the sum of the following components: the dispersion force component of the solid, represented as $\gamma_S^d$; the dipole force component of the solid, represented as $\gamma_S^p$; and the hydrogen bond force component of the solid, represented as $\gamma_S^h$. Furthermore, $\gamma_L$ is represented as the sum of the dispersion force component of the liquid, represented as $\gamma_L^d$, the dipole force component of the liquid, represented as $\gamma_L^p$, and the hydrogen bond force component of the liquid, represented as $\gamma_L^h$. By the extended Fowkes equation, the adhesive work ($W_{SL}$) is represented by Expression (5) below.

$$W_{SL} = 2\left(\sqrt{\gamma_S^d \gamma_L^d} + \sqrt{\gamma_S^p \gamma_L^p} + \sqrt{\gamma_S^h \gamma_L^h}\right) \qquad (5)$$

Expression (6) below holds based on Expressions (4) and (5).

$$\frac{\gamma_L \left(1 - \cos\theta\right)}{2} = \sqrt{\gamma_S^d \gamma_L^d} + \sqrt{\gamma_S^p \gamma_L^p} + \sqrt{\gamma_S^h \gamma_L^h} \qquad (6)$$

Based on Expression (6), simultaneous equations with the three unknowns $\gamma_S{}^d$, $\gamma_S{}^p$, and $\gamma_S{}^h$ can be set up by acquiring the contact angle of the bubble 43 for three types of liquids for which $\gamma_L{}^d$, $\gamma_L{}^p$, and $\gamma_L{}^h$ are known. In other words, the components included in ys are calculated by solving simultaneous equations with three variables. The value of ys, which represents the surface free energy of the solid, is thus calculated by calculating each component included in ys.

Examples of liquids for which the components included in $\gamma_L$ are known include water, n-hexadecane, and methylene iodide. The $\gamma_L{}^d$, $\gamma_L{}^P$, and $\gamma_L{}^h$ of water can respectively be 29.1 (mN/m), 1.3 (mN/m), and 42.4 (mN/m). The $\gamma_L{}^d$, $\gamma_L{}^p$, and $\gamma_L{}^h$ of n-hexadecane can respectively be 27.6 (mN/m), 0.0 (mN/m), and 0.0 (mN/m). The $\gamma_L{}^d$, $\gamma_L{}^p$, and $\gamma_L{}^h$ of methylene iodide can respectively be 46.8 (mN/m), 4.0 (mN/m), and 0.0 (mN/m).

When the fluid 42 is surrounded by the wall 41, the measurement system 1 may further include a port in the wall 41 for sampling the fluid 42. The measurement system 1 may further include an analysis unit that calculates the $\gamma_L{}^d$, $\gamma_L{}^p$, and $\gamma_L{}^h$ of the sampled fluid 42. The analysis unit may calculate the $\gamma_L{}^d$, $\gamma_L{}^p$, and $\gamma_L{}^h$ of the sampled fluid 42 by various analysis methods, such as X-ray spectroscopy. The measurement system 1 may acquire the result from an external apparatus that calculates the $\gamma_L{}^d$, $\gamma_L{}^p$, and $\gamma_L{}^h$ of the sampled fluid 42. By acquiring three different types of components as the components of the $\gamma_L$ of the fluid 42, the measurement system 1 may calculate each component of the ys of the wall 41 to calculate the ys.

The wall 41 may be at least a portion of the inner wall of a tank retaining the fluid 42. The wall 41 may be at least a portion of the inner wall of a tube through which the fluid 42 flows. In other words, the fluid 42 may be positioned in an area surrounded by the wall 41. The detector 20 may detect the contact state of the bubble 43 with respect to the wall 41 on the inside of the area surrounded by the wall 41. The wall 41 on the inside of the area surrounded by the wall 41 corresponds to the inner wall of the tank or tube.

In the present embodiment, the wall 41 is assumed to be at least a portion of the inner wall of a tube through which the fluid 42 flows. By detecting the state of the wall 41 based on the contact angle of the bubble 43 with respect to the wall 41, the measurement system 1 according to the present embodiment can detect the state of the wall 41 while the fluid 42 remains in contact with the wall 41.

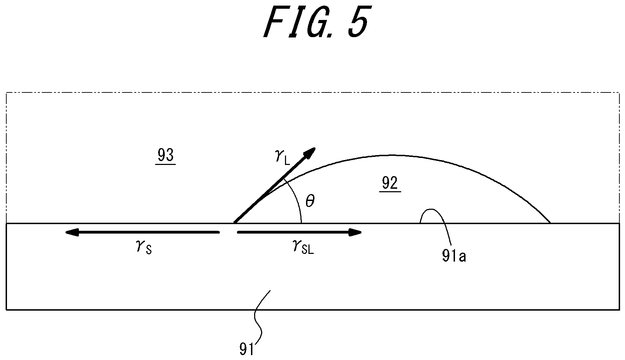

In a system according to a comparative example, a droplet 92 is placed in contact with a surface 91a of a solid sample 91 in an atmosphere 93, and the contact angle of the droplet 92 represented by θ' is measured to acquire the state of the surface 91a of the solid sample 91, as illustrated in FIG. 5. In FIG. 5, $\gamma_{SL}$ represents the interfacial tension acting between the solid sample 91 and the droplet 92. Furthermore, ys represents the interfacial tension acting between the solid sample 91 and the atmosphere 93, i.e. the surface tension of the solid sample 91. Finally, $\gamma_L$ represents the interfacial tension acting between the droplet 92 and the atmosphere 93, i.e. the surface tension of the droplet 92.

In the system according to the comparative example, the droplet 92 cannot be placed in contact with the surface 91a when the solid sample 91 is immersed in liquid. In other words, to detect the contact angle of the droplet 92 on the surface 91a, the solid sample 91 is prevented from being in contact with a liquid other than the droplet 92. The fluid 42 flowing in the tube needs to be temporarily drained for the system according to the comparative example to acquire the state of the surface 41a of the wall 41, which is at least a portion of the inner wall of the tube.

By contrast, the fluid 42 need not be drained to detect the state of the wall 41 in the measurement system 1 according to the present embodiment. The measurement system 1 according to the present embodiment can therefore detect the state of the wall 41 in-situ.

The state of the wall 41 includes the surface roughness of the surface 41a of the wall 41 and the surface free energy on the surface 41a. The surface roughness of the surface 41a of the wall 41, which is at least a portion of the inner wall of the tube, and the surface free energy on the surface 41a may change due to deterioration of the surface 41a resulting from a chemical reaction on the surface 41a, friction on the surface 41a from the flow of the fluid 42, or the like. Chemical reactions on the surface 41a include corrosion, alteration, and the like. In other words, the measurement system 1 can detect deterioration of the surface 41a of the wall 41 by detecting the state of the wall 41. The deterioration of the tube that includes the wall 41 as at least a portion of the inner wall can thereby be monitored while the fluid 42 is still flowing in the tube. Consequently, the inner wall of the tube can easily be monitored. The deterioration of the surface 41a can, for example, progress due to peeling of a surface coating applied to the surface 41a, such as a fluororesin coating.

When the detector 20 includes the imaging apparatus 21, the imaging apparatus 21 may be inserted inside the tube that includes the wall 41 as at least a portion of the inner wall. The imaging apparatus 21 may be positioned in a recess provided on the inner wall of the tube so that the imaging apparatus 21 does not project into the flow path of the fluid 42. The imaging apparatus 21 may instead project from the inner wall of the tube into the flow path of the fluid 42. The position and orientation of the imaging apparatus 21 may be controlled based on operation input from the user via the UI 30.

When the detector 20 includes an ultrasonic device, the ultrasonic device may be positioned on the outside of the tube that includes the wall 41 as at least a portion of the inner wall. The ultrasonic device may be positioned to enable acquisition of the cross-sectional state of the bubble 43 adhered to the inner wall of the tube. The position and orientation of the ultrasonic device may be controlled based on operation input from the user via the UI 30.

The detector 20 may acquire an image related to the cross-sectional state of the bubble 43 on the detection side or may acquire an image related to the cross-sectional shape of the bubble 43 in a plane inclined at a predetermined angle relative to the detection side. When the cross-section of the bubble 43 is inclined relative to the detection side, the detector 20 may correct the image related to the cross-sectional state of the bubble 43 based on the inclination relative to the detection side.

The contact state of the bubble 43 with respect to the wall 41 may be represented not only by the contact angle of the bubble 43, but also as the ease of adhesion of the bubble 43 to the wall 41. The ease of adhesion of the bubble 43 may be represented by the number of bubbles 43 adhered within a predetermined area of the wall 41. The number of bubbles adhered within a predetermined area of the wall 41 is also referred to as the number of adhered bubbles. When the wall 41 is at least a portion of the inner wall of the tube through which the fluid 42 flows, the ease of adhesion of the bubble 43 may be represented by the number of bubbles adhered while the fluid 42 is flowing in the tube at a predetermined flow rate.

The ease of adhesion of the bubble 43 may be represented based on the number of adhered bubbles when the flow of the fluid 42 in the tube is 0 and the number of adhered bubbles when the flow of the fluid 42 is R. The number of adhered bubbles when the flow of the fluid 42 is 0 is designated $N_0$. The number of adhered bubbles when the flow of the fluid 42 is R is designated $N_r$. In this case, the value represented by $R \times N_r/N_0$ may be defined in the measurement system 1 as an index representing the ease of adhesion of the bubble 43. A function taking R, $N_r$, and $N_0$ as parameters may be defined in the measurement system 1 as an index representing the ease of adhesion of the bubble 43.

The ease of adhesion of the bubble 43 may be represented based on the number of adhered bubbles at a first time represented by $T_1$ and the number of adhered bubbles at a second time represented by $T_2$. The second time is defined as the time at which a predetermined time has elapsed from the first time. The numbers of adhered bubbles at the first time and the second time are referred to as the first number of bubbles and the second number of bubbles. The first number of bubbles and the second number of bubbles are represented by Ni and $N_2$. It is assumed that the fluid 42 flows in the tube at a flow rate represented by R from the first time to the second time. In this case, the value represented by $R \times N_2/N_1$ may be defined in the measurement system 1 as an index representing the ease of adhesion of the bubble 43. A function taking R, $N_1$, and $N_2$ as parameters may be defined in the measurement system 1 as an index representing the ease of adhesion of the bubble 43. The ease of adhesion of the bubble 43 is not limited to the exemplified definitions and may be represented by various other definitions.

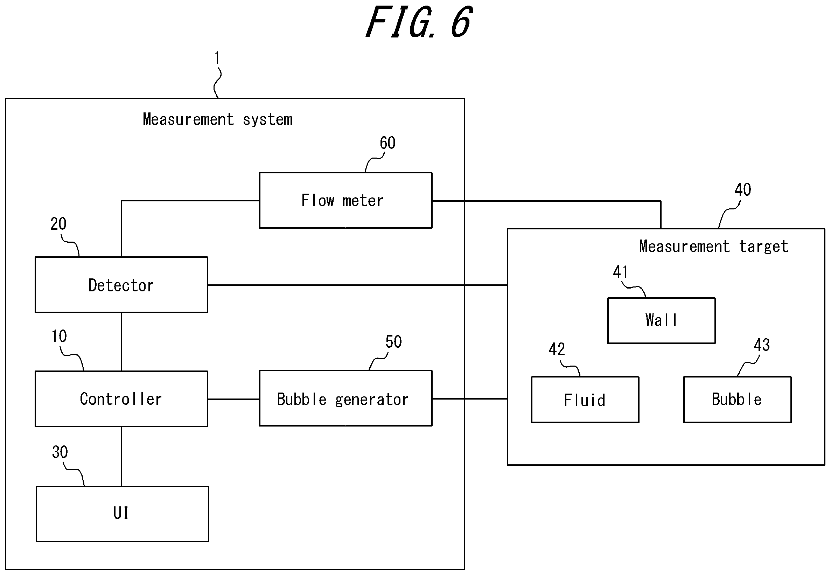

As illustrated in FIG. 6, the measurement system 1 according to another embodiment may further include a bubble generator 50. At the measurement target 40, the bubble generator 50 generates bubbles 43 in the fluid 42 to produce bubbles 43 that adhere to the wall 41. The measurement system 1 may use the detector 20 to detect the state of the bubbles 43 generated by the bubble generator 50.

The bubble generator 50 may be a propeller or the like that stirs an area including the interface between a gas and a liquid. The bubble generator 50 may generate the bubbles 43 by mixing a gas into a liquid. The bubble generator 50 may be an ultrasonic oscillator that generates ultrasonic waves. The bubble generator 50 may turn a gas dissolved in the liquid into the bubbles 43 by directing ultrasonic waves towards the liquid to produce the phenomenon of ultrasonic cavitation.

The bubble generator 50 may generate the bubbles 43 while the fluid 42 is at rest. This facilitates adhesion of the generated bubbles 43 onto the wall 41. Consequently, the contact angle of the bubble 43 can be measured more easily.

The bubble generator 50 may generate the bubbles 43 while the fluid 42 is flowing. This facilitates acquisition of the ease of adhesion of the bubble 43.

The measurement system 1 may further include a flow meter 60. The flow meter 60 measures the flow of the fluid 42 flowing through the tube. The detector 20 may detect the ease of adhesion of the bubble 43 based on the measurement result of the flow meter 60.

The bubble generator 50 may control the size of the bubble 43 that adheres to the wall 41. For example, as the bubble 43 is smaller, the bubble 43 can stably continue to be adhered to the wall 41 for a long time. As the bubble 43 is larger, for example, the detector 20 can more easily detect the state of the bubble 43 adhered to the wall 41.

The detector 20 may detect the contact state of the bubble 43 with respect to the wall 41 at a predetermined timing. The controller 10 may acquire the detection result from the detector 20 and store the detection result in the memory. The controller 10 may detect a change in the state of the measurement target 40 based on a comparison between the stored detection result and the newly acquired detection result. In other words, the measurement system 1 may monitor a change in state by acquiring the state of the measurement target 40 at least two times separated by a predetermined time period. The predetermined timing may, for example, be once per day or once per month. The predetermined timing may be a cyclical timing or may be an irregular timing. The predetermined timing may be specified by operation input from the user via the UI 30.

The measurement system 1 may detect a change in the state of the wall 41 by monitoring the change in state of the measurement target 40. The timing of maintenance of the wall 41 may be determined based on the change in state of the wall 41. The measurement system 1 may detect a change in the state of the fluid 42 by monitoring the change in state of the measurement target 40. The quality of the fluid 42 may be monitored based on the change in state of the fluid 42. The measurement system 1 may detect a change in the state of the bubble 43 by monitoring the change in state of the measurement target 40. The quality of gas dissolved in the fluid 42 may be monitored based on the change in state of the bubble 43. The quality of the fluid 42 may thereby be monitored.

The detector 20 may calculate the contact angle of each bubble 43 among a plurality of bubbles 43 included in the measurement target 40. The controller 10 may statistically process the contact angles of the bubbles 43, for example by calculating the average, and acquire the state of the measurement target 40 based on the result of the statistical processing.

As described above, the measurement system 1 according to the present embodiment acquires the state of at least one of the wall 41, the fluid 42, and the bubble 43 by detecting the adhesion state of the bubble 43 to the wall 41. The measurement system 1 can also acquire a combination of two or more of these states. This configuration can detect the state of the surface 41a of the wall 41 even when the contact angle of a droplet adhered to the wall 41 cannot be detected due to the fluid 42 being in contact with the wall 41. Consequently, a change in the state of the surface 41a of the wall 41 can be monitored while the fluid 42 remains in contact with the wall 41. If the change in the state of the fluid 42 and the bubble 43 is assumed to be negligibly small, the change in the state of the surface 41a of the wall 41 can be monitored to a higher degree of accuracy.

If the change in the state of the surface 41a of the wall 41 is assumed to be negligibly small, the change in the state of the fluid 42 can be monitored. For example, when the fluid 42 is an industrial product such as oil or a beverage, the measurement system 1 can monitor the quality of the fluid 42 as an industrial product by monitoring the change in the state of the fluid 42.

If the change in the state of the surface 41a of the wall 41 is assumed to be negligibly small, the change in the state of the bubble 43 can be monitored. For example, when a liquid such as a fermented liquid that generates gas is included in the fluid 42, the measurement system 1 can monitor the quality of the fluid 42 by monitoring the change in state of the bubble 43. When the fluid 42 includes a fermented liquid, the degree of fermentation of the fermented liquid can be monitored.

The UI 30 may report information to the user such as an image representing the shape of the bubble 43 detected by the detector 20, the calculation result of the contact angle of the bubble 43, the number of adhered bubbles, or the like. The UI 30 may report the result of monitoring the measurement target 40 including the change in state of the wall 41, the change in state of the fluid 42, the change in state of the bubble 43, or the like.

Embodiments of the present disclosure have been described with reference to the drawings, but specific configurations are not limited to these embodiments, and a variety of modifications may be made without departing from the scope thereof.

REFERENCE SIGNS LIST

1 Measurement system
10 Controller
20 Detector
21 Imaging apparatus
22 Ultrasonic transmitter
23 Ultrasonic receiver
30 User interface
40 Measurement target
41 Wall
41a Surface
42 Fluid
43 Bubble
43a Interface
50 Bubble generator
60 Flow meter

**Claims**

1. A measurement system (1) comprising:

   a detector (20) configured to detect a contact state of a bubble (43) with respect to a wall (41), the bubble (43) being included in a fluid (42) that is in contact with the wall (41); and
a controller (10) configured to acquire a state of at least one of the wall (41), the fluid (42), and the bubble (43) based on the contact state of the bubble (43) with respect to the wall (41), wherein
the fluid (42) is positioned in an area surrounded by the wall (41),
the detector (20) is configured to detect the contact state of the bubble (43) on an inside of the area surrounded by the wall (41),
the wall (41) is at least a portion of an inner wall of a tube through which the fluid (42) flows,
the detector (20) is configured to detect the contact state of the bubble (43) with respect to the inner wall while the fluid (42) is flowing through the tube,
the detector (20) is configured to detect a number of bubbles in contact with the wall (41) at a first time as a first number of bubbles and detect a number of bubbles in contact with the wall (41) at a second time as a second number of bubbles, the second time being a predetermined time after the first time, and
the controller (10) is configured to acquire the state of at least one of the wall, the fluid (42), and the bubble (43) based on a comparison between the first number of bubbles and the second number of bubbles.

2. The measurement system (1) of claim 1, wherein the detector (20) is configured to output ultrasonic waves towards the bubble (43) and detect the contact state of the bubble (43) based on at least one of ultrasonic waves that pass through the bubble (43) and ultrasonic waves reflected by the bubble (43).

3. The measurement system (1) of claim 2, wherein the detector (20) is configured to generate an ultrasonic image of the bubble (43) and detect the contact state of the bubble (43) based on the ultrasonic image.

4. The measurement system (1) of claim 1, wherein the detector (20) is configured to generate a captured image by imaging a bubble (43) in contact with the wall and detect the contact state of the bubble (43) based on the captured image.

5. The measurement system (1) of any one of claims 1 to 4, wherein the controller (10) is configured to acquire the state of at least one of the wall (41), the fluid (42), and the bubble (43) at least two times separated by a predetermined time period and monitor a change in the state.

**Patentansprüche**

1. Messsystem (1), umfassend:

   einen Detektor (20), der so konfiguriert ist, dass er einen Kontaktzustand einer Blase (43) in Bezug auf eine Wand (41) detektiert, wobei die Blase (43) in einem Fluid (42) eingeschlossen ist, das mit der Wand (41) in Kontakt ist; und
   eine Steuereinheit (10), die so konfiguriert ist, dass sie einen Zustand von mindestens einem von der Wand (41), dem Fluid (42) und der Blase (43) basierend auf dem Kontaktzustand der Blase (43) in Bezug auf die Wand (41) erfasst, wobei
   das Fluid (42) in einem Bereich positioniert ist, der von der Wand (41) umgeben ist,
   der Detektor (20) so konfiguriert ist, dass er den Kontaktzustand der Blase (43) an einer Innenseite des von der Wand (41) umgebenen Bereichs detektiert,
   die Wand (41) mindestens ein Teil einer Innenwand eines Rohrs ist, durch das das Fluid (42) fließt,
   der Detektor (20) so konfiguriert ist, dass er den Kontaktzustand der Blase (43) in Bezug auf die Innenwand detektiert, während das Fluid (42) durch das Rohr fließt,
   der Detektor (20) so konfiguriert ist, dass er eine Anzahl von Blasen in Kontakt mit der Wand (41) zu einem ersten Zeitpunkt als eine erste Anzahl von Blasen detektiert und eine Anzahl von Blasen in Kontakt mit der Wand (41) zu einem zweiten Zeitpunkt als eine zweite Anzahl von Blasen detektiert, wobei der zweite Zeitpunkt eine vorbestimmte Zeit nach dem ersten Zeitpunkt ist, und
   die Steuereinheit (10) so konfiguriert ist, dass sie den Zustand von mindestens einem von der Wand, dem Fluid (42) und der Blase (43) basierend auf einem Vergleich zwischen der ersten Anzahl von Blasen und der zweiten Anzahl von Blasen erfasst.

2. Messsystem (1) nach Anspruch 1, wobei der Detektor (20) so konfiguriert ist, dass er Ultraschallwellen in Richtung der Blase (43) ausgibt und den Kontaktzustand der Blase (43) basierend auf mindestens einem von Ultraschallwellen, die die Blase (43) durchdringen, und Ultraschallwellen, die von der Blase (43) reflektiert werden, detektiert.

**3.** Messsystem (1) nach Anspruch 2, wobei der Detektor (20) so konfiguriert ist, dass er ein Ultraschallbild der Blase (43) erzeugt und den Kontaktzustand der Blase (43) basierend auf dem Ultraschallbild detektiert.

**4.** Messsystem (1) nach Anspruch 1, wobei der Detektor (20) so konfiguriert ist, dass er ein aufgenommenes Bild erzeugt, indem er eine Blase (43) in Kontakt mit der Wand abbildet, und den Kontaktzustand der Blase (43) basierend auf dem aufgenommenen Bild detektiert.

**5.** Messsystem (1) nach einem der Ansprüche 1 bis 4, wobei die Steuereinheit (10) so konfiguriert ist, dass sie den Zustand von mindestens einem von der Wand (41), dem Fluid (42) und der Blase (43) mindestens zweimal im Abstand einer vorgegebenen Zeitspanne erfasst und eine Änderung des Zustands überwacht.

**Revendications**

**1.** Système (1) de mesure comprenant :

un détecteur (20) configuré pour détecter un état de contact d'une bulle (43) par rapport à une paroi (41), la bulle (43) étant incluse dans un fluide (42) qui est en contact avec la paroi (41) ; et
un dispositif (10) de commande configuré pour acquérir un état d'au moins l'un parmi la paroi (41), le fluide (42) et la bulle (43) sur la base de l'état de contact de la bulle (43) par rapport à la paroi (41), dans lequel
le fluide (42) est positionné dans une zone entourée par la paroi (41),
le détecteur (20) est configuré pour détecter l'état de contact de la bulle (43) sur un intérieur de la zone entourée par la paroi (41),
la paroi (41) est au moins une partie d'une paroi interne d'un tube à travers lequel le fluide (42) s'écoule,
le détecteur (20) est configuré pour détecter l'état de contact de la bulle (43) par rapport à la paroi interne pendant que le fluide (42) s'écoule à travers le tube,
le détecteur (20) est configuré pour détecter un nombre de bulles en contact avec la paroi (41) dans un premier temps en tant que premier nombre de bulles et détecter un nombre de bulles en contact avec la paroi (41) dans un deuxième temps en tant que deuxième nombre de bulles, le deuxième temps étant un temps prédéterminé après le premier temps, et
le dispositif (10) de commande est configuré pour acquérir l'état d'au moins l'un parmi la paroi, le fluide (42) et la bulle (43) sur la base d'une comparaison entre le premier nombre de bulles et le deuxième nombre de bulles.

**2.** Système (1) de mesure selon la revendication 1, dans lequel le détecteur (20) est configuré pour émettre des ondes ultrasonores vers la bulle (43) et détecter l'état de contact de la bulle (43) sur la base d'au moins une des ondes ultrasonores qui traversent la bulle (43) et des ondes ultrasonores réfléchies par la bulle (43).

**3.** Système (1) de mesure selon la revendication 2, dans lequel le détecteur (20) est configuré pour générer une image ultrasonore de la bulle (43) et détecter l'état de contact de la bulle (43) sur la base de l'image ultrasonore.

**4.** Système (1) de mesure selon la revendication 1, dans lequel le détecteur (20) est configuré pour générer une image capturée par l'imagerie d'une bulle (43) en contact avec la paroi et détecter l'état de contact de la bulle (43) sur la base de l'image capturée.

**5.** Système (1) de mesure selon l'une quelconque des revendications 1 à 4, dans lequel le dispositif (10) de commande est configuré pour acquérir l'état d'au moins l'un parmi la paroi (41), le fluide (42) et la bulle (43) au moins à deux moments séparés par une période de temps prédéterminée et surveiller un changement de l'état.

# FIG. 1

# FIG. 2

# FIG. 3

FIG. 4

# FIG. 5

*FIG. 6*

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2018182391 A
- JP 2017133924 A
- JP 2011059104 A
- JP 2002062242 A

**Non-patent literature cited in the description**

- Experimental and theoretical analysis of bubble departure behavior in narrow rectangular channel. **XU JIANJUN et al.** PROGRESS IN NUCLEAR ENERGY. PERGAMON PRESS, 25 June 2014, vol. 77
- Confined characteristics of bubble during boiling in microchannel. **YIN LIAOFEI et al.** EXPERIMENTAL THERMAL AND FLUID SCIENCE. ELSEVIER, 02 January 2016, vol. 74
- Surface wettability control by nanocoating: The effects on pool boiling heat transfer and nucleation mechanism. **PHAN H T et al.** INTERNATIONAL JOURNAL OF HEAT AND MASS TRANSFER. ELSEVIER, 01 November 2009, vol. 52